# EUROPÄISCHE PATENTSCHRIFT

(11) **EP 2 760 090 B1**
(45) Veröffentlichungstag und Bekanntmachung des Hinweises auf die Patenterteilung: **18.11.2015**
(21) Anmeldenummer: 14151404.2
(22) Anmeldetag: 16.01.2014
(51) Int. Cl.: H02B 1/32, H02B 1/01

(54) **Befestigungssystem und Einbausatz für die Montage eines Montagestegs in einem Schaltschrank**
Fastening system and kit for mounting an assembly support in a switch cabinet
Système de fixation et kit d'intégration pour le montage d'une passerelle de montage dans une armoire de commande

(30) Priorität: 28.01.2013 DE 102013100822
(43) Veröffentlichungstag der Anmeldung: 30.07.2014
(73) Patentinhaber: RITTAL GmbH & Co. KG, 35745 Herborn (DE)
(72) Erfinder: Bach, Michael, 35768 Siegbach (DE); Blöcher, Gunther, 35713 Eschenburg (DE); Holighaus, Heiko, 35713 Eschenburg (DE)
(74) Vertreter: Angerhausen, Christoph

(56) Entgegenhaltungen:
- EP-A1- 2 453 538
- WO-A1-2004/113740
- WO-A1-2007/020612
- WO-A2-98/23138
- DE-C1- 10 243 717
- DE-U1- 8 418 270

## Beschreibung

Die Erfindung betrifft ein Befestigungssystem und einen Einbausatz für die Montage eines Montagestegs in einem Schaltschrank, wobei das Befestigungssystem ein Raststück und eine erste Adapterplatte aufweist, wobei das Raststück einen einen Rastvorsprung aufweisenden Rastabschnitt mit einem zwischen einer Offenstellung und einer Verriegelungsstellung verstellbaren Zapfen und einen Befestigungsabschnitt für einen Montagesteg aufweist, und wobei die erste Adapterplatte eine Ausnehmung für die Aufnahme des Zapfens und Mittel für die Befestigung der ersten Adapterplatte an einer Profilstrebe eines Schaltschrankrahmengestells oder an einer Montageschiene aufweist, wobei der Zapfen in einer ersten Ausnehmung des Raststücks aufgenommen und zwischen der Offenstellung und der Verriegelungsstellung linear verstellbar geführt ist, und bei dem das Raststück eine zweite Ausnehmung aufweist, die in die erste Ausnehmung mündet, wobei durch die zweite Ausnehmung hindurch ein Betätigungselement geführt ist, das an dem Zapfen angreift. Ein derartiges Befestigungssystem ist aus der DE 102 43 717 C1 bekannt. Eine ähnliche Vorrichtung beschreibt auch die WO 98/23138 A1.

Für die Anordnung der im Innern des Schaltschranks aufgenommenen Schaltschrankkomponenten ist die Verwendung von sogenannten Montageplatten bekannt. Diese werden häufig mit Hilfe von Montageplattenhaltern, welche einerseits mit dem Rahmengestell des Schaltschrankes und andererseits mit der Montageplatte verschraubt sind, im Innern des Schaltschranks befestigt. Ein Schaltschrank mit einer wie zuvor beschrieben befestigten Montageplatte ist beispielsweise aus der DE 84 18 270 U1 bekannt.

Ja nach Anwendung können anstelle von Montageplatten auch sogenannte Einbaurahmen oder Verdrahtungsrahmen Verwendung finden. Diese sind häufig über vertikale Montagestege mit Profilstreben des Schaltschrankrahmengestells verschraubt. Einen entsprechenden Einbaurahmen beschreibt die DE 78 24 434 U1.

Bei den aus dem Stand der Technik bekannten Befestigungstechnologien sind häufig Schraubverbindungen vorgesehen, um die Montageplatte mit dem Montageplattenhalter bzw. um die Montagestege des Einbaurahmens mit dem Schaltschrank zu verbinden. Die Herstellung der geforderten Schraubverbindungen ist bei den zum Teil beengten Platzverhältnissen im Innern des Schaltschrankes häufig umständlich und mit hohem Aufwand verbunden.

Es ist daher die Aufgabe der Erfindung, ein gattungsgemäßes Befestigungssystem sowie einen entsprechenden Einbausatz für die Montage eines Montagestegs in einem Schaltschrank bereitzustellen, die die einfache und vorzugsweise werkzeuglose Montage eines Montagestegs und damit eines Einbaurahmens im Innern eines Schaltschranks ermöglichen.

Diese Aufgabe wird erfindungsgemäß von einem Befestigungssystem gemäß Anspruch 1 sowie einem Einbausatz gemäß Anspruch 6 gelöst. Die übrigen Ansprüche betreffen jeweils vorteilhafte Ausführungsformen der Erfindung.

Das erfindungsgemäße Befestigungssystem zeichnet sich dadurch aus, dass die erste Ausnehmung im Verlauf eine erste Breite und daran angrenzend eine zweite Breite aufweist, wobei die erste Breite größer als die zweite Breite ist, wobei der Zapfen einen ersten Abschnitt mit der ersten Breite und einen zweiten Abschnitt mit der zweiten Breite aufweist und entlang zumindest eines der Abschnitte in der ersten Ausnehmung geführt ist, wobei der zweite Abschnitt mit der zweiten Breite zumindest abschnittsweise in einem Bereich der ersten Ausnehmung, der die erste Breite aufweist, angeordnet ist, und wobei in diesem Bereich zwischen dem zweiten Abschnitt des Zapfens und einer Berandung der ersten Ausnehmung ein Federelement angeordnet ist.

Bevorzugt ist der Zapfen im Innern des Raststücks aufgenommen und geführt, wobei der Rastvorsprung gerade von dem Teil des Zapfens gebildet wird, welcher aus dem Raststück herausragt. In der Verriegelungsstellung soll der Rastvorsprung aus dem Raststück herausragen, um beispielsweise in die Ausnehmung der ersten Adapterplatte hineinragen zu können. In der Offenstellung soll der Rastvorsprung zumindest so weit in das Raststück hineingezogen sein, dass der Rastvorsprung mit der Ausnehmung der Adapterplatte nicht mehr in Eingriff steht und somit der Montagesteg freigegeben ist.

Vorzugsweise ist der Zapfen in Richtung Verriegelungsstellung vorgespannt, so dass für die Überführung des Zapfens aus der Verriegelungsstellung in die Offenstellung das Federelement mit Hilfe des Betätigungselementes vorgespannt werden muss. Bei einer Ausführungsform kann das Betätigungselement in der Offenstellung des Zapfens eine Rastposition einnehmen.

Bei einer Ausführungsform ist der Rastabschnitt im Wesentlichen quaderförmig ausgebildet, wobei sich die erste Ausnehmung ausgehend von einer ersten Quaderseite des Rastabschnitts und die zweite Ausnehmung ausgehend von einer sich zu der ersten Quaderseite senkrecht erstreckenden zweiten Quaderseite des Rastabschnitts erstreckt.

Um das Raststück in der Verriegelungsstellung zu sichern, ist ein bei einer Ausführungsform vorgesehen, dass in der Verriegelungsstellung die Gewindeaufnahme mit einer Stiftaufnahme, welche sich ausgehend von einer Seite des Raststücks erstreckt, welche gegenüber von derjenigen Seite angeordnet ist, in welcher die zweite Ausnehmung ausgebildet ist, fluchtet, so dass in der Verriegelungsstellung die Stiftaufnahme, die Gewindeaufnahme und ein oberer Abschnitt der zweiten Ausnehmung fluchten. Dadurch wird erreicht, dass das Betätigungselement in der Verriegelungsstellung so weit in das Raststück eingeschraubt werden kann, bis es durch die zweite Ausnehmung und den Zapfen hindurch bis in die Stiftaufnahme hinein ragt, um so den Zapfen in der Verriegelungsstellung zu festzulegen.

Bei einer anderen Ausführungsform ist zu Sicherung des Raststücks in der Verriegelungsstellung vorgesehen, dass die zweite Ausnehmung schlüssellochartig ausgeformt ist, wobei das Betätigungselement einen Schaft mit einem ersten Durchmesser und ein Kopfstück mit einem zweiten, größeren Durchmesser aufweist, wobei letzterer im wesentlichen dem Innendurchmesser eines breiten Endes des Schlüsselloches entspricht, so dass das Betätigungselement in der Verriegelungsstellung, in welcher es sich durch das breite Ende erstreckt, so weit eingeschraubt werden kann, bis das Kopfstück in dem breiten Ende des Schlüsselloches lagert und das Betätigungselement in der Verriegelungsstellung festlegt ist.

Vorzugsweise weist der Befestigungsabschnitt mindestens eine Steckaufnahme für ein erstes Profilende eines Montagestegs auf, wobei die Steckaufnahme eine Kontur aufweist, die an eine Außen- oder Innengeometrie des ersten Profilendes für die form- oder kraftschlüssige Verbindung der Steckaufnahme mit dem ersten Profilende angepasst ist.

Der erfindungsgemäße Einbausatz weist neben einem Befestigungssystem der zuvor beschriebenen Art weiterhin ein Fußstück auf, das einen Befestigungsabschnitt für den Montagesteg aufweist, wobei der Befestigungsabschnitt mindestens eine Steckaufnahme für ein zweites Profilende des Montagestegs aufweist, und wobei das Fußstück an einer dem Befestigungsabschnitt gegenüber liegenden Seite mindestens einen Zapfen aufweist, über den das Fußstück in eine Ausnehmung oder einen Durchlass einer zweiten Adapterplatte, einer Profilstrebe eines Schaltschrankrahmengestells, oder einer Montageschiene einsetzbar ist.

Vorzugsweise weist der Einbausatz weiterhin eine zweite Adapterplatte auf, die eine Ausnehmung für die Aufnahme des Zapfens des Fußstücks und Mittel für die Befestigung der zweiten Adapterplatte an einer Profilstrebe eines Schaltschrankrahmengestells oder einer Montageschiene aufweist. Die Befestigungsmittel können Formschlussadapter sein, welche in eine Systemlochung oder anderweitige Ausnehmungen oder Durchlässe in der Profilstrebe oder in der Montageschiene einsetzbar sind. Dazu können die Formschlussadapter eine Umfangskontur aufweisen, welche der Kontur des Durchlasses zumindest abschnittsweise entspricht.

Um die Montage des Montagestegs weiter zu erleichtern, ist bei einer Ausführungsform der Erfindung vorgesehen, dass die erste und/oder die zweite Adapterplatte eine sich senkrecht zur Längserstreckung ihrer Ausnehmung, ausgehend von einer Berandung der Adapterplatte und in die Ausnehmung mündend erstreckende Führungsnut aufweist. Weiterhin kann die erste und/oder die zweite Adapterplatte einen Anschlag aufweisen, an welchem das Raststück bzw. das Fußstück anliegt, wenn es eine Montageposition erreicht hat.

Bei einer weiteren Ausführungsform des Einbausatzes oder des Befestigungssystems weist die erste und/oder die zweite Adapterplatte an einer in Montageposition einer Profilstrebe eines Schaltschrankrahmengestells oder einer Montageschiene zugewandten Seite zur Vorpositionierung der Adapterplatte bezüglich der Profilstrebe mindestens eine Formschlusskontur auf, die eine Außenkontur aufweist, die an eine Innenkontur einer Lochung der Profilstrebe angepasst ist. Um eine klemmende Verbindung zwischen der Adapterplatte und der Profilstrebe zu erreichen, kann die Formschlusskontur derart bemessen sein, dass sie in der Lochung der Profilstrebe klemmend aufgenommen ist.

Soll der Montagesteg nicht zwischen Horizontalstreben des Schaltschrankrahmengestells befestigt werden, sondern beispielsweise um eine bestimmte Abmessung beabstandet von der Rückseite des Schaltschrankes, ist bei einer Ausführungsform des Einbausatzes vorgesehen, dass dieser weiterhin eine Montageschiene aufweist, die zur Montage zwischen gegenüber liegenden Profilstreben eines Schaltschrankrahmengestells ein erstes und ein zweites Befestigungsende aufweist, wobei die Montageschiene eine Auflageseite für die Adapterplatte, den Rastabschnitt, oder das Fußstück aufweist, und wobei die Auflageseite mindestens eine Ausnehmung, mindestens einen Durchlass, oder eine Systemlochung aufweist.

Weitere Einzelheiten der Erfindung werden anhand der nachstehenden Figuren erläutert. Dabei zeigt:
- Figur 1: eine perspektivische Teilansicht auf das Rahmengestell eines Schaltschranks mit zwei erfindungsgemäß montierten Montagestegen;
- Figur 1a: eine perspektivische Ansicht einer Schiene, die als Einführungshilfe für das Fußstück dient;
- Figuren 2a bis 2c: zwei perspektivische Ansichten sowie eine Draufsicht auf die Unterseite eines erfindungsgemäßen Fußstücks gemäß einer Ausführungsform;
- Figuren 3a bis 3e: eine erste Ausführungsform eines erfindungsgemäßen Raststücks sowie dessen Bestandteile;
- Figuren 4a und 4b: eine zweite Ausführungsform eines erfindungsgemäßen Raststücks;
- Figuren 5a und 5b: eine perspektivische Draufsicht sowie eine Seitenquerschnittsansicht einer erfindungsgemäßen Adapterplatte gemäß einer Ausführungsform;
- Figur 6: eine Draufsicht auf eine erfindungsgemäße Montageschiene gemäß einer Ausführungsform.

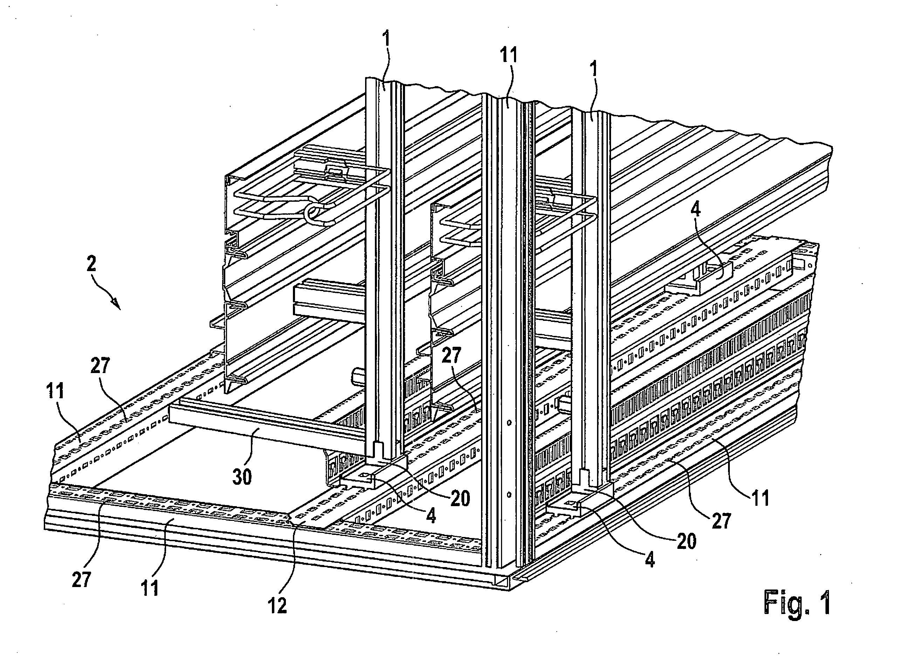

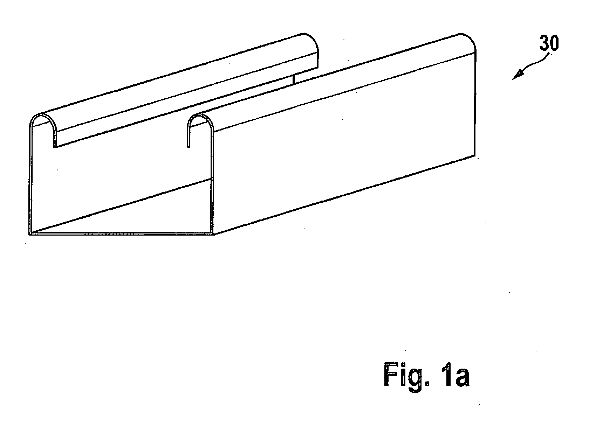

Der in Figur 1 gezeigte Schaltschrank 2 weist ein Rahmengestell auf, das aus vier vertikalen Profilstreben 11 sowie acht horizontalen Profilstreben 11 zusammengesetzt ist. Die Figur 1 zeigt eine perspektivische Sicht auf die Bodenseite des Schaltschranks 2. Ein erster, in der Darstellung gemäß Figur 1 rechter Montagesteg 1 ist über ein erfindungsgemäßes Fußstück 20 sowie eine Adapterplatte 4 auf einer horizontalen Profilstrebe 11 des Bodenrahmens des Schaltschranks 2 aufgesetzt. Dieser kann beispielsweise für die Montage von Schaltschrankkomponenten bzw. eines Einbaurahmens nahe der Rückwand des Schaltschranks dienen. Ein weiterer, in der Darstellung linker Montagesteg 1 ist auf eine Montageschiene 12 aufgesetzt, welche sich zwischen parallel beabstandeten Profilstreben 11 des Bodenrahmens des Schaltschranks 2 erstreckt. Der Montagesteg 1 ist wiederum über ein erfindungsgemäßes Fußstück 20 sowie eine Adapterplatte 4 auf der Montageschiene 12 aufgesetzt. Dieser Montagesteg 1 ist somit beabstandet von der Rückwand des Schaltschranks 2 und dient dementsprechend zur Montage von Schaltschrankkomponenten unter einem bestimmten Abstand zu der Schaltschrankrückwand, etwa um zwischen der Schaltschrankrückwand und den Schaltschrankkomponenten bzw. dem mit Hilfe des Montagestegs 1 gebildeten Einbaurahmen, einen Luftstrom zur Kühlung der Schaltschrankkomponenten durchzuleiten. Die Profilstreben 11 sowie die Montageschiene 12 weisen jeweils eine Systemlochung 27 auf, welche eine variable Anordnung der Adapterplatte auf den Profilstreben 11 bzw. der Montageschiene 12 und damit eine variable Anordnung des Montagestegs 11 ermöglicht. Ebenso weisen die Profilstreben 11, zwischen welchen die Montageschiene 12 angeordnet ist, eine Systemlochung 27 auf, so dass auch die Montageschiene 12 und damit der betreffende Montagesteg 1 unter einem weitestgehend frei wählbaren Abstand zu der Rückwand des Schaltschranks 2 angeordnet werden kann.

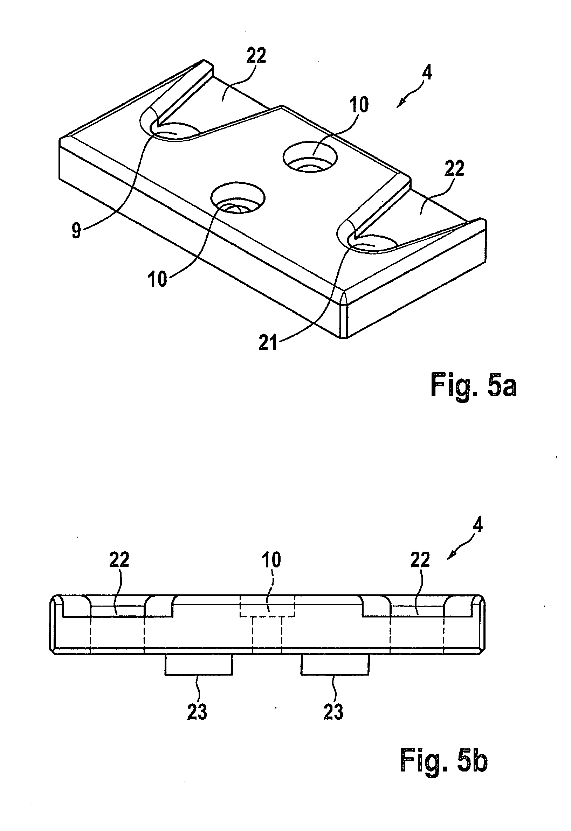

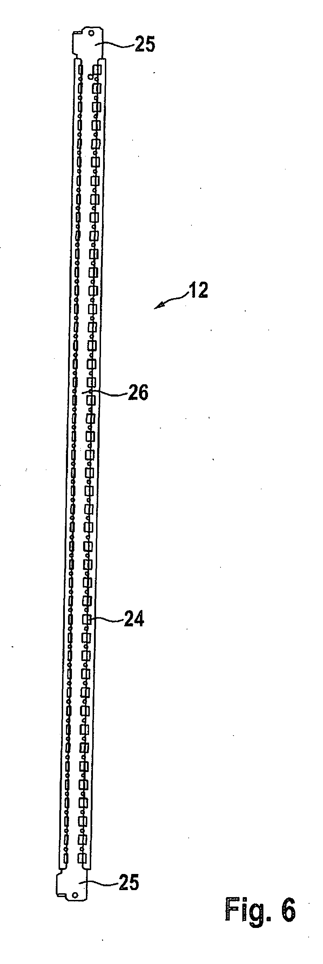

Für die Montage des Montagestegs 1 wird zunächst die Adapterplatte 4 unter dem gewünschten Abstand zur Schaltschrankrückwand angeordnet. Soll die Adapterplatte 4 nicht auf einer Profilstrebe 11 aufgesetzt werden, ist dazu zunächst die Montageschiene 12 unter einem geeigneten Abstand zu der Schaltschrankrückwand anzuordnen. Die Montageschiene 12 kann über Befestigungsenden 25 (vgl. Figur 6) mit den Profilstreben 11 des Schaltschrankgestells, auf welchem sie aufliegt, verbunden, beispielsweise verschraubt, werden. Wie in Figur 5b gezeigt ist, weist die Adapterplatte 4 Formschlusskonturen 23 auf, welche an die Lochung 27 der Montageschiene 12 bzw. der Profilstreben 11 angepasst ist. Die Formschlusskonturen 23 ermöglichen in Verbindung mit der Lochung 27 eine einfache Vorpositionierung der Adapterplatte und damit eine einfache vertikale Ausrichtung der Montagestege 1. Nachdem die Adapterplatte 4 wie zuvor beschrieben vorpositioniert worden ist, kann sie wahlweise mit der Profilstrebe 11 bzw. mit der Montageschiene 12 verbunden, beispielsweise verschraubt, werden. Dazu weist die Adapterplatte 4 Befestigungsmittel 10 auf. Wie in Figur 5a gezeigt ist, können die Befestigungsmittel 10 beispielsweise als Durchlässe für einen Bolzen oder dergleichen ausgebildet sein. Grundsätzlich sind die Befestigungsmittel 10 jedoch auf keine bestimmten beschränkt und können daher entsprechend einer bevorzugten Befestigungstechnik des Benutzers ausgewählt sein.

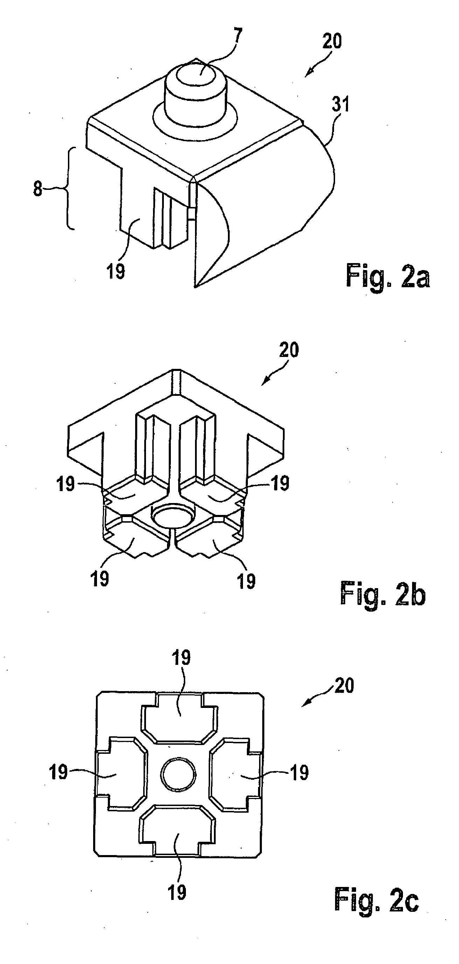

Der Montagesteg 1 kann ein mehrfach gekantetes Profil, beispielsweise ein Hohlprofil mit Längsnuten für die Aufnahme von Befestigungsmitteln, wie Bolzen, sein. Vorzugsweise ist der Montagesteg 1 beispielsweise ein im Strangpressverfahren hergestelltes Profil, das über seine gesamte Länge denselben Querschnitt aufweist. Wie in den Figuren 2a bis 2c gezeigt ist, kann das Fußstück 20 einen Befestigungsabschnitt 8 aufweisen, mit Steckaufnahmen 19, welche eine Geometrie aufweisen, die gerade an die Querschnittsgeometrie des Montagestegs 1 angepasst ist. Die Steckaufnahmen 19 können beispielsweise für die formschlüssige Aufnahme im Innern des als Hohlprofil ausgebildeten Montagestegs 1 ausgeformt sein. Die Steckaufnahmen 19 weisen vorzugsweise über ihre gesamte Länge einen identischen oder annähernd identischen oder konischen Querschnitt auf, so dass das Fußstück 20 über seine Steckaufnahmen 19 auf ein freies Ende des Montagestegs 1 aufgeschoben werden kann. Eine konische Geometrie der Steckaufnahme 19 kann für eine Verklemmung des Fußstücks 20 auf dem Montagesteg 1 dienen. Es ist jedoch erfindungsgemäß nicht zwingend erforderlich, dass das Fußstück 20 kraftschlüssig mit dem Ende des Montagestegs 1 verbunden wird. Vielmehr reicht eine formschlüssige, oder annähernd formschlüssige Verbindung zwischen dem Fußstück 20 und dem Montagesteg 1. An einer Außenseite weist das Fußstück 20 eine Anlaufkontur 31 auf, die den Steckaufnahmen 19 unter einem Abstand vorgelagert sind, derart, dass die Anlaufkontur 31 auf der Längsseite des Montagestegs 1 angeordnet ist, wenn das Fußstück bestimmungsgemäß auf ein Montagestegende aufgesteckt ist.

Nachdem das Fußstück 20 wie zuvor beschrieben auf ein Ende des Montagestegs 1 aufgeschoben worden ist, kann der Montagesteg 1 über den Zapfen 7 des Fußstücks 20 auf die Adapterplatte 4 aufgesetzt werden, derart, dass der Zapfen 7 des Fußstücks 20 in einer Ausnehmung oder einen Durchlass 21 der Adapterplatte 4 eindringt. Um den Einsetzvorgang und insbesondere die Vereinigung von Zapfen 7 und Ausnehmung 9 bzw. Durchlass 21 zu vereinfachen, weist die Adapterplatte 4 eine Führungsnut 22 auf, welche sich von einer Berandung der Adapterplatte 4 bis zu der Ausnehmung 9 bzw. dem Durchlass 21 erstreckt, wobei die Führungsnut 22 zur Berandung der Adapterplatte 4 hin zur leichteren Einfädelung des Zapfens 7 konisch aufgeweitet ist.

Eine weitere Erleichterung des Montagevorgangs wird durch die Verwendung zweier optionaler Schienen 30 erreicht, welche sich zwischen jeweils einer der unteren Adapterplatten 4 und einer horizontalen, unteren, vorderen Profilstrebe 11 des Schaltschrankrahmens erstrecken und mit dieser verschraubt sind, oder in diese eingesteckt oder eingeklipst sind. Dadurch kann ein Montagerahmen über die Fußstücke 20 der Montagestege 1 an der Schaltschrankvorderseite auf die Schienen 30 schräg aufgesetzt und durch Verschieben entlang der Schienen 30 den Adapterplatten 4 angenähert werden. Um das Gleiten der Fußstücke 20 über die Schienen 30 zu begünstigen, weisen die Fußstücke 20 eine Anlaufkontur 31 auf, über welche die Fußstücke 20 auf die Schienen 30 aufgesetzt werden, und entlang welcher der Montagerahmen in der Endposition verschwenkt werden kann, um die Zapfen 7 in die Durchlässe 21 der Adapterplatten 4 einzuschwenken. Anschließend können die Schienen 30 wieder entfernt werden. In Figur 1a ist die Schiene 30 im Detail dargestellt. Sie ist U-förmig ausgebildet und weist an den freien Enden der parallelen Flansche jeweils eine runde Umkantung auf, welche das Gleiten der Anlaufkontur 31 auf der Schiene 30 begünstigt. Das Fußstück 20 mit der Anlaufkontur 31 ist in Figur 2a gezeigt.

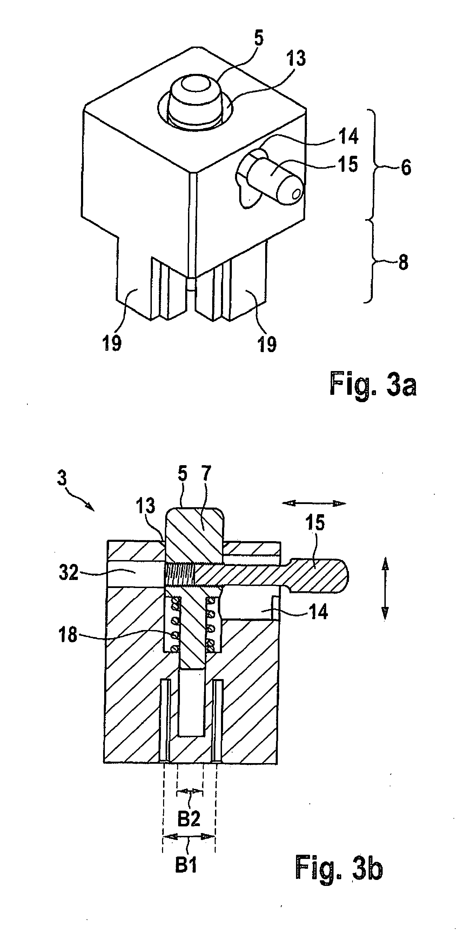

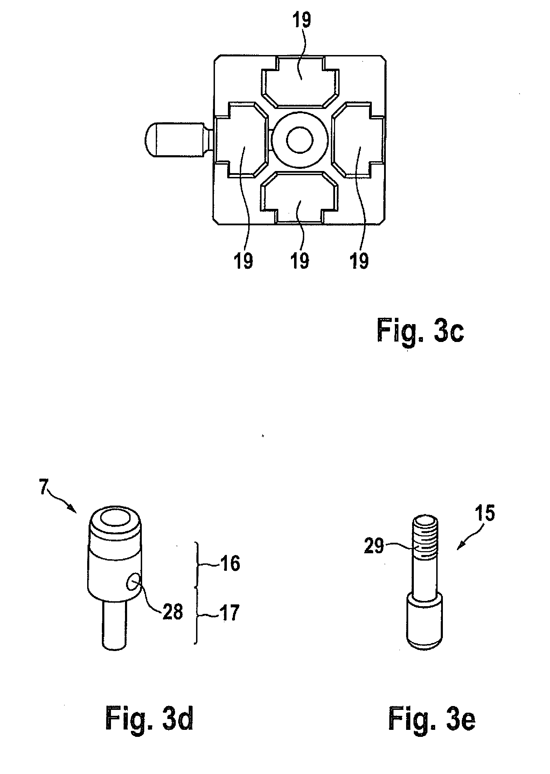

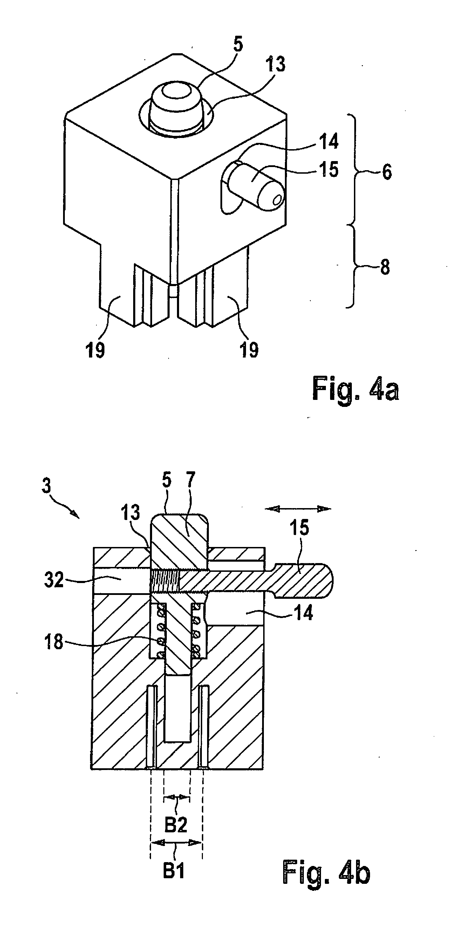

Die Figuren 3a und 3b zeigen eine erste Ausführungsform und die Figuren 4a und 4b zeigen eine zweite Ausführungsform eines erfindungsgemäßen Raststücks, wobei die Detailansichten 3c bis 3e für beide Ausführungsformen gelten.

Auf das dem Fußstück 20 gegenüberliegende Ende des Montagestegs 1 ist ein Raststück 3 aufgesetzt. Das Raststück 3 weist einen Rastabschnitt 6 und einen Befestigungsabschnitt 8 auf. In dem Rastabschnitt 6 ist eine erste Ausnehmung 13 ausgebildet, in welcher ein Zapfen 7 geführt ist. Der Zapfen 7 ist entlang seiner Längserstreckung zwischen einer Offenstellung und einer Verriegelungsstellung verschiebbar gelagert. Der Zapfen 7 ragt zumindest in der Verriegelungsstellung um einen Längenbetrag aus dem Rastabschnitt 6 heraus, wobei dieser Abschnitt des Zapfens 7 gerade einen Rastvorsprung 5 bildet. Der Zapfen 7 ist über ein Federelement 18 in Richtung Schließstellung vorgespannt.

Eine zweite Ausnehmung 14 erstreckt sich senkrecht zu der ersten Ausnehmung 13 und mündet in die erste Ausnehmung 13. Durch die zweite Ausnehmung 14 hindurch ragt ein Betätigungselement 15, welches an dem Zapfen 7 angreift. Bei der in den Figuren 3a und 3b gezeigten Ausführungsform ist die zweite Ausnehmung schlüssellochförmig ausgebildet. Das Betätigungselement 15 weist ein Gewinde 29 auf, wobei der Zapfen 7 eine Gewindeaufnahme 28 aufweist, in welche das Betätigungselement 15 eingeschraubt ist. Das Betätigungselement 15 weist in seinem Längenabschnitt, entlang welchem es durch die zweite Ausnehmung hindurchragt, eine Breite in Richtung der Verstellrichtung des Zapfens 7 auf, welche kleiner als eine Abmessung der zweiten Ausnehmung 14 in dieser Richtung ist. Die Figuren 3a und 3b zeigen jeweils das erfindungsgemäße Raststück 3 in der Verriegelungsstellung. Dabei ragt der Rastvorsprung 5 aus dem Rastabschnitt 6 heraus. Beim Überführen des Zapfens 7 aus der Verriegelungsstellung in die Offenstellung kann der Zapfen 7 nur so weit in den Rastabschnitt 6 zurückgezogen werden, bis das Betätigungselement 15 an einer unteren Begrenzungsfläche der zweiten Ausnehmung 14 anliegt. Beim Überführen des Zapfens 7 aus der Verriegelungsstellung in die Offenstellung wird das Federelement 18 weiter vorgespannt.

Bei der Ausführungsform gemäß den Figuren 3a und 3b fluchtet in der Verriegelungsstellung die Gewindeaufnahme 28 des Zapfens 7 mit einer Stiftaufnahme 32, welche sich ausgehend von einer Seite des Raststücks 3 erstreckt, welche gegenüber von derjenigen Seite angeordnet ist, in welcher die zweite Ausnehmung ausgebildet ist, so dass in der Verriegelungsstellung die Stiftaufnahme 32, die Gewindeaufnahme 28 und ein oberer Abschnitt der zweiten Ausnehmung fluchten. Das Betätigungselement 15 kann daher in der Verriegelungsstellung soweit eingeschraubt werden, bis es sich in die Stiftaufnahme 32 erstreckt und damit das Raststück 3 in der Verriegelungsposition sichert.

Die zweite Ausnehmung 14 kann, wie in den Figuren 3a und 3b gezeigt ist, schlüssellochartig, oder, wie in den Figuren 4a und 4b gezeigt ist, ausgeformt sein. Wenn die zweite Ausnehmung 14 schlüssellochartig ausgeformt und das Betätigungselement 15, wie in Fig. 3e gezeigt ist, einen Schaft mit einem ersten Durchmesser und ein Kopfstück mit einem zweiten, größeren Durchmesser aufweist, wobei letzterer im wesentlichen dem Innendurchmesser eines breiten Endes des Schlüsselloches entspricht, kann das Betätigungselement 15 in der Verriegelungsstellung, in welcher sich das Betätigungselement 15 durch das breite Ende erstreckt, so weit eingeschraubt werden, bis das Kopfstück in dem breiten Ende des Schlüsselloches lagert und damit das Raststück 3 in der Verriegelungsstellung sichert.

Bei der in den Figuren 4a und 4b gezeigten Ausführungsform ist ebenfalls eine Stiftaufnahme 32 ausgebildet, welche in der Verriegelungsstellung mit der Gewindeaufnahme 28 des Zapfens 7 fluchtet, so dass in dieser das Betätigungselement 15 so weit in die Gewindeaufnahme 28 eingeschraubt werden kann, bis das Einschraubende des Betätigungselements 15 in die Stiftaufnahme 32 hineinragt und damit den Zapfen 7 in der Verriegelungsstellung festlegt.

Die erste Ausnehmung 13 weist einen Bereich mit einer ersten Dicke B1 und einen Bereich mit einer zweiten Dicke B2 auf. Dabei ist der erste Abschnitt 16 des Zapfens 7 in dem Bereich der ersten Ausnehmung mit der Breite B1 geführt und ist dazu entsprechend bemessen. Analog ist der zweite Abschnitt 17 des Zapfens 7 in dem Bereich der ersten Ausnehmung 13 mit der Breite B2 geführt. Der zweite Abschnitt 17 des Zapfens 7 ragt je nachdem, ob sich der Zapfen 7 in der Offenstellung oder in der Verriegelungsstellung befindet, mehr oder weniger weit in den Bereich der ersten Ausnehmung 13 hinein, welche die Breite B 1 aufweist. Insoweit der zweite Abschnitt 17 in den Bereich der ersten Ausnehmung mit der Breite B1 hineinragt, ist zwischen dem zweiten Abschnitt 17 und der Begrenzungswand der ersten Ausnehmung 13 ein ringförmiger Freiraum gebildet, in welchem das Federelement 18 aufgenommen ist. Vorzugsweise ist das Federelement 18 eine Spiralfeder, welche in dem betreffenden Bereich um den zweiten Abschnitt 17 des Zapfens 7 herum angeordnet ist. Analog zu dem Fußstück 20 weist auch das Raststück 3 einen Befestigungsabschnitt 8 mit Steckaufnahmen 19 auf, welche an die Querschnittsgeometrie des Montagestegs 1 angepasst sind. Wenn das Raststück 3 über den Befestigungsabschnitt 8 auf den Montagesteg 1 aufgesetzt ist, ist der Zapfen 7 in Längsrichtung des Montagestegs 1 zwischen der Offen- und der Verriegelungsstellung verstellbar.

Mit dem wie zuvor beschrieben angeordneten Raststück 3 kann nun der Montagesteg 1 in eine weitere Adapterplatte 4 eingeschwenkt werden, welche sich vertikal oberhalb derjenigen Adapterplatte 4 befindet, in welche zuvor das Fußstück 20 eingesetzt wurde. Auch diese weitere Adapterplatte 4 kann entsprechend ihrem bodenseitigen Pendant entweder an einer Profilstrebe 1 oder an einer Montageschiene 12 angeordnet sein. Das Raststück 3 wird nun mit Hilfe des Betätigungselementes 15 aus der Schließstellung in die Offenstellung überführt. Der Einschwenkvorgang wird für den Benutzer taktil erkennbar durch einen Anschlag der Adapterplatte 4 begrenzt. Nach dem Erreichen der Montageposition kann das Betätigungselement 15 freigegeben werden, woraufhin das Raststück 3 die Schließstellung einnimmt, so dass der Montagesteg nunmehr verriegelt ist. Die obere und die untere Adapterplatte 4 können identische Bauteile sein, oder individuell an das Raststück 3 oder das Fußstück 20 angepasste Bauteile sein.

Die in Figur 6 gezeigte Montageschiene 12 weist Befestigungsenden 25 auf, über welche sie an gegenüberliegenden Profilstreben des Rahmengestells eines Schaltschranks montiert werden können. Die Befestigungsenden 25 können Mittel für die Vorpositionierung der Montageschiene, etwa Rastnasen, welche in eine Lochung der jeweiligen Profilstrebe eingreifen, aufweisen. Für eine darüber hinausgehende, kraftschlüssige Verbindung können die Befestigungsenden 25 für eine Schraubverbindung zwischen Montageschiene 12 und Profilstrebe 11 vorbereitet sein und dazu beispielsweise einen Durchlass für einen Bolzen aufweisen. Die Montageschiene 12 weist eine Auflageseite 26 auf, welche bei Befestigung der Montageschiene 12 zwischen parallelen Horizontalstreben des Schaltschranks eine horizontale Montageebene für die Adapterplatten 4 bildet. Für die einfache Ausrichtung der Adapterplatte 4 auf der Auflageseite 26 weist diese eine Lochung 24, beispielsweise eine Systemlochung aus regelmäßig beabstandeten und identischen Löchern auf.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

**Bezugszeichenliste**

| | | | |
|---|---|---|---|
| 1 | Montagesteg | 30 | Schiene |
| 2 | Schaltschrank | 31 | Anlaufkontur |
| 3 | Raststück | 32 | Stiftaufnahme |
| 4 | Adapterplatte | B1 | erste Breite |
| 5 | Rastvorsprung | B2 | zweite Breite |
| 6 | Rastabschnitt | | |
| 7 | Zapfen | | |
| 8 | Befestigungsabschnitt | | |
| 9 | Ausnehmung | | |
| 10 | Mittel | | |
| 11 | Profilstrebe | | |
| 12 | Montageschiene | | |
| 13 | erste Ausnehmung | | |
| 14 | zweite Ausnehmung | | |
| 15 | Betätigungselement | | |
| 16 | erster Abschnitt | | |
| 17 | zweiter Abschnitt | | |
| 18 | Federelement | | |
| 19 | Steckaufnahme | | |
| 20 | Fußstück | | |
| 21 | Durchlass | | |
| 22 | Führungsnut | | |
| 23 | Formschlusskontur | | |
| 24 | Lochung | | |
| 25 | Befestigungsende | | |
| 26 | Auflageseite | | |
| 27 | Systemlochung | | |
| 28 | Gewindeaufnahme | | |
| 29 | Gewinde | | |

## Patentansprüche

1. Befestigungssystem für die Montage eines Montagestegs (1) in einem Schaltschrank (2), mit einem Raststück (3) und einer ersten Adapterplatte (4), wobei das Raststück (3) einen einen Rastvorsprung (5) aufweisenden Rastabschnitt (6) mit einem zwischen einer Offenstellung und einer Verriegelungsstellung verstellbaren Zapfen (7) und einen Befestigungsabschnitt (8) für einen Montagesteg (1) aufweist, und wobei die erste Adapterplatte (4) eine Ausnehmung (9) für die Aufnahme des Zapfens (7) und Mittel (10) für die Befestigung der ersten Adapterplatte (4) an einer Profilstrebe (11) eines Schaltschrankrahmengestells oder an einer Montageschiene (12) aufweist, wobei der Zapfen (7) in einer ersten Ausnehmung (13) des Raststücks (3) aufgenommen und zwischen der Offenstellung und der Verriegelungsstellung linear verstellbar geführt ist, und bei dem das Raststück (3) eine zweite Ausnehmung (14) aufweist, die in die erste Ausnehmung (13) mündet, wobei durch die zweite Ausnehmung (14) hindurch ein Betätigungselement (15) geführt ist, das an dem Zapfen (7) angreift, **dadurch gekennzeichnet, dass** die erste Ausnehmung (13) im Verlauf eine erste Breite (B1) und daran angrenzend eine zweite Breite (B2) aufweist, wobei die erste Breite (B1) größer als die zweite Breite (B2) ist, wobei der Zapfen (7) einen ersten Abschnitt (16) mit der ersten Breite (B1) und einen zweiten Abschnitt (17) mit der zweiten Breite (B2) aufweist und entlang zumindest eines der Abschnitte (16, 17) in der ersten Ausnehmung (13) geführt ist, wobei der zweite Abschnitt (17) mit der zweiten Breite (B2) zumindest abschnittsweise in einem Bereich der ersten Ausnehmung (13), der die erste Breite (B1) aufweist, angeordnet ist, und wobei in diesem Bereich zwischen dem zweiten Abschnitt (17) des Zapfens (7) und einer Berandung der ersten Ausnehmung (13) ein Federelement (18) angeordnet ist.

2. Befestigungssystem nach Anspruch 1, bei dem der Rastabschnitt (6) im Wesentlichen quaderförmig ausgebildet ist, wobei sich die erste Ausnehmung (13) ausgehend von einer ersten Quaderseite des Rastabschnitts (6) und die zweite Ausnehmung (14) ausgehend von einer sich zu der ersten Quaderseite senkrecht erstreckenden zweiten Quaderseite des Rastabschnitts (6) erstreckt.

3. Befestigungssystem nach Anspruch 1 oder 2, bei dem in der Verriegelungsstellung eine Gewindeaufnahme (28) des Zapfens (7) mit einer Stiftaufnahme (32), welche sich ausgehend von einer Seite des Raststücks (3) erstreckt, welche gegenüber von derjenigen Seite angeordnet ist, in welcher die zweite Ausnehmung (14) ausgebildet ist, fluchtet, so dass in der Verriegelungsstellung die Stiftaufnahme (32), die Gewindeaufnahme (28) und ein oberer Abschnitt der zweiten Ausnehmung (14) fluchten, so dass das Betätigungselement (15) in der Verriegelungsstellung so weit eingeschraubt werden kann, bis es sich mit seinem freien Einsteckende in die Stiftaufnahme (32) hinein erstreckt.

4. Befestigungssystem nach einem der vorangegangenen Ansprüche, bei dem die zweite Ausnehmung (14) schlüssellochartig ausgeformt ist, wobei das Betätigungselement (15) einen Schaft mit einem ersten Durchmesser und ein Kopfstück mit einem zweiten, größeren Durchmesser aufweist, wobei letzterer im wesentlichen dem Innendurchmesser eines breiten Endes des Schlüsselloches entspricht, so dass das Betätigungselement (15) in der Verriegelungsstellung, in welcher es sich durch das breite Ende erstreckt, so weit eingeschraubt werden kann, bis das Kopfstück in dem breiten Ende des Schlüsselloches lagert und das Betätigungselement (15) in der Verriegelungsstellung festlegt ist.

5. Befestigungssystem nach einem der vorangegangenen Ansprüche, bei dem der Befestigungsabschnitt (8) mindestens eine Steckaufnahme (19) für ein erstes Profilende eines Montagestegs (1) aufweist, wobei die Steckaufnahme (19) eine Kontur aufweist, die an eine Außen- oder Innengeometrie des ersten Profilendes für die form- oder kraftschlüssige Verbindung der Steckaufnahme (19) mit dem ersten Profilende angepasst ist.

6. Einbausatz für die Montage eines Montagestegs (1) in einem Schaltschrank (2), mit einem Befestigungssystem nach einem der vorangegangenen Ansprüche sowie mit einem Fußstück (20), das einen Befestigungsabschnitt (8) für den Montagesteg (1) aufweist, wobei der Befestigungsabschnitt (8) mindestens eine Steckaufnahme (19) für ein zweites Profilende des Montagestegs (1) aufweist, und wobei das Fußstück (20) an einer dem Befestigungsabschnitt (8) gegenüber liegenden Seite mindestens einen Zapfen (7) aufweist, über den das Fußstück (20) in eine Ausnehmung oder einen Durchlass (21) einer zweiten Adapterplatte (4), einer Profilstrebe (11) eines Schaltschrankrahmengestells, oder einer Montageschiene (12) einsetzbar ist.

7. Einbaussatz nach Anspruch 6, der weiterhin eine zweite Adapterplatte (4) aufweist, die eine Ausnehmung (9) für die Aufnahme des Zapfens (7) des Fußstücks (20) und Mittel (10) für die Befestigung der zweiten Adapterplatte (4) an einer Profilstrebe (11) eines Schaltschrankrahmengestells oder einer Montageschiene (12) aufweist.

8. Einbausatz oder Befestigungssystem nach einem der vorangegangenen Ansprüche, bei dem die erste und/oder die zweite Adapterplatte (4) eine sich senkrecht zur Längserstreckung ihrer Ausnehmung (9), ausgehend von einer Berandung der Adapterplatte (4) und in die Ausnehmung (9) mündend erstreckende Führungsnut (22) aufweist.

9. Einbausatz oder Befestigungssystem nach einem der vorangegangenen Ansprüche, bei dem die erste und/oder die zweite Adapterplatte (4) an einer in Montageposition einer Profilstrebe (11) eines Schaltschrankrahmengestells oder einer Montageschiene (12) zugewandten Seite zur Vorpositionierung der Adapterplatte (4) bezüglich der Profilstrebe mindestens eine Formschlusskontur (23) aufweist, die eine Außenkontur aufweist, die an eine Innenkontur einer Lochung (24) der Profilstrebe (11) oder der Montageschiene (12) angepasst ist.

10. Einbaussatz nach einem der Ansprüche 8 bis 10, der weiterhin eine Montageschiene (12) aufweist, die zur Montage zwischen gegenüber liegenden Profilstreben (11) eines Schaltschrankrahmengestells ein erstes und ein zweites Befestigungsende (25) aufweist, wobei die Montageschiene (12) eine Auflageseite (26) für die Adapterplatte (4) den Rastabschnitt (6) oder für das Fußstück (20) aufweist, und wobei die Auflageseite (26) mindestens eine Ausnehmung, mindestens einen Durchlass, oder eine Systemlochung (27) aufweist.

## Claims

1. Fastening system for mounting an assembly support (1) in a switch cabinet (2), with a locking piece (3) and a first adapter plate (4), wherein the locking piece (3) has a locking section (6) having a locking projection (5), with a pin (7) which is adjustable between an open position and a locked position, and with a fastening section (8) for an assembly support (1), and wherein a first adapter plate (4) has a recess (9) for receiving the pin (7) and means (10) for the fastening of the first adapter plate (4) to a profile strut (11) of a switch cabinet frame or on an assembly rail (12), wherein the pin (7) is received in a first recess (13) of the locking piece (3) and guided linearly adjustably between the open position and the locked position, and in which the locking piece (3) has a second recess (14) leading into the first recess (13), wherein an actuation element (15) is passed through the second recess (14) and engages with the pin (7), **characterized in that** the first recess (13) along its course has a first width (B1) and adjoining thereto a second width (B2), wherein the first width (B1) is greater than the second width (B2), wherein the pin (7) has a first section (16) with the first width (B1) and a second section (17) with the second width (B2), and is guided along at least one of the sections (16, 17) in the first recess (13), wherein the second section (17) with the second width (B2) is arranged at least in some sections in an area of the first recess (13) which has the first width (B1), and wherein a spring element (18) is arranged in this area between the second section (17) of the pin (7) and a boundary of the first recess (13).

2. Fastening system according to Claim 1, in which the locking section (6) has a design of essentially cuboid shape, wherein the first recess (13) extends starting from a first cuboid side of the locking section (6) and the second recess (14) extends starting from a second cuboid side of the locking section (6), which extends perpendicularly to the first cuboid side.

3. Fastening system according to Claim 1 or 2, in which, in the locked position, a threaded receiver (28) of the pin (7) is in alignment with a pin receiver (32) extending starting from a side of the locking piece (3) which is arranged opposite the side in which the second recess (14) is formed, so that, in the locked position of the pin receiver (32), the threaded receiver (28) and an upper section of the second recess (14) are in alignment, so that the actuation element (15) in the locked position can be screwed until it extends with its free plug-in end into the pin receiver (32).

4. Fastening system according to any one of the preceding claims, in which the second recess (14) is in the shape of a keyhole, wherein the actuation element (15) has a shaft with a first diameter and a head piece with a second, larger diameter, wherein the latter corresponds substantially to the inner diameter of a broad end of the keyhole, so that, in the locked position in which it extends through the broad end, the actuation element (15) can be screwed in until the head piece is mounted in the broad end of the keyhole and the actuation element (15) is set in the locked position.

5. Fastening system according to any one of the preceding claims, in which the fastening section (8) has at least one plug receiver (19) for a first profile end of an assembly support (1), wherein the plug receiver (19) has a contour which is adapted to an outer or inner geometry of the first profile end for the positive locking connection and a frictional connection of the plug receiver (19) with the first profile end.

6. Kit for mounting an assembly support (1) in a switch cabinet (2), with a fastening system according to any one of the preceding claims as well as with a foot piece (20) which has a fastening section (8) for the assembly support (1), wherein the fastening section (8) comprises at least one plug receiver (19) for a second profile end of the assembly support (1), and wherein the foot piece (20), on a side facing the fastening section (8), has at least one pin (7) by means of which the foot piece (20) can be inserted in a recess or in a passage (21) of a second adapter plate (4), of a profile strut (11) of a switch cabinet frame, or of an assembly rail (12).

7. Kit according to Claim 6, which moreover has a second adapter plate (4) having a recess (9) for the receiving the pin (7) of the foot piece (20) and a means (10) for fastening the second adapter plate (4) to a profile strut (11) of a switch cabinet frame or of an assembly rail (12).

8. Kit or fastening system according to any one of the preceding claims, in which the first and/or the second adapter plate (4) has a guide groove (22) extending perpendicularly to the longitudinal direction of the recess (9) of said adapter plate, starting from a boundary of the adapter plate (4) and leading into the recess (9).

9. Kit or fastening system according to any one of the preceding claims, in which, on a side which, in a mounting position, faces a profile strut (11) of a switch cabinet frame or of an assembly rail (12), for the preliminary positioning of the adapter plate (4) relative to the profile strut, the first and/or the second adapter plate (4) has/have at least one positive locking contour (23) with an outer contour that is adapted to an inner contour of a perforation (24) of the profile strut (11) or of the assembly rail (12).

10. Kit according to any one of the preceding Claims 8 to 10, which moreover comprises an assembly rail (12), which, in order to be mounted between facing profiled struts (11) of a switch cabinet frame, has a first and a second fastening end (25), wherein the assembly rail (12) has a contact side (26) for the adapter plate (4), the locking section (6) or for the foot piece (20), and wherein the contact side (26) has at least one recess, at least one passage, or one system perforation (27).

## Revendications

1. Système de fixation pour le montage d'un support de montage (1) dans une armoire de commande (2), avec une pièce d'encliquetage (3) et une première plaque d'adaptation (4), la pièce d'encliquetage (3) présentant un segment d'encliquetage (6) présentant une saillie d'encliquetage (5) avec un tourillon (7) réglable entre une position d'ouverture et une position de verrouillage et avec un segment de fixation (8) pour un support de montage (1), et la première plaque d'adaptation (4) présentant un creux (9) destiné à recevoir le tourillon (7) et des moyens (10) destinés à la fixation de la première plaque d'adaptation (4) sur une contrefiche profilée (11) d'un châssis-cadre d'armoire électrique ou sur un rail de montage (12), le tourillon (7) étant reçu dans un premier creux (13) de la pièce d'encliquetage (3) et étant guidé de façon réglable linéairement entre la position d'ouverture et la position de verrouillage, et dans lequel la pièce d'encliquetage (3) présente un deuxième creux (14) qui débouche dans le premier creux (13), et dans lequel, à travers le deuxième creux (14), il est guidé un élément d'actionnement (15) qui agit sur le tourillon (7), **caractérisé en ce que** le tracé du premier creux (13) présente une première largeur (B1) et puis, de façon adjacente à celle-ci, une deuxième largeur (B2), la première largeur (B1) étant plus grande que la deuxième largeur (B2), le tourillon (7) présentant un premier segment (16) avec la première largeur (B1) et un deuxième segment (17) avec la deuxième largeur (B2) et étant guidé le long d'au moins un des segments (16, 17) dans le premier creux (13), le deuxième segment (17) avec la deuxième largeur (B2) étant disposé au moins par tronçons dans une zone du premier creux (13) qui présente la première largeur (B1), et un élément de ressort (18) étant disposé dans cette zone entre le deuxième segment (17) du tourillon (7) et une bordure du premier creux (13).

2. Système de fixation selon la revendication 1, dans lequel le segment d'encliquetage (6) est constitué de façon essentiellement parallélépipédique, le premier creux (13) s'étendant à partir d'un premier côté de parallélépipède du segment d'encliquetage (6) et le deuxième creux (14) s'étendant à partir d'un deuxième côté de parallélépipède du segment d'encliquetage (6) s'étendant perpendiculairement au premier côté de parallélépipède.

3. Système de fixation selon la revendication 1 ou 2, dans lequel, dans la position de verrouillage, un logement fileté (28) du tourillon (7) est en affleurement avec un logement de broche (32) qui s'étend à partir d'un côté de la pièce d'encliquetage (3) qui est disposé en face du côté dans lequel est constitué le deuxième creux (14), de telle sorte que, dans la position de verrouillage, le logement de broche (32), le logement fileté (28) et un segment supérieur du deuxième creux (14) sont en affleurement de telle sorte que l'élément d'actionnement (15) peut, dans la position de verrouillage, être vissé jusqu'à ce qu'il pénètre dans le logement de broche (32) avec son extrémité d'introduction libre.

4. Système de fixation selon l'une des revendications précédentes, dans lequel le deuxième creux (14) est formé à la façon d'un trou de serrure, l'élément d'actionnement (15) présentant un arbre avec un premier diamètre et une pièce de tête avec un deuxième diamètre plus grand, ce dernier correspondant essentiellement au diamètre intérieur d'une extrémité large du trou de serrure de telle sorte que l'élément d'actionnement (15) peut, dans la position de verrouillage dans laquelle il s'étend à travers à travers l'extrémité large, être vissé jusqu'à ce que la pièce de tête repose dans l'extrémité large du trou de serrure et jusqu'à ce que l'élément d'actionnement (15) soit immobilisé dans la position de verrouillage.

5. Système de fixation selon l'une des revendications précédentes, dans lequel le segment de fixation (8) présente au moins un logement d'introduction (19) pour une première extrémité profilée d'un support de montage (1), le logement d'introduction (19) présentant un contour qui est adapté à une géométrie extérieure ou intérieure de la première extrémité profilée pour raccorder, par liaison de forme ou de force, le logement d'introduction (19) à la première extrémité profilée.

6. Kit d'installation pour le montage d'un support de montage (1) dans une armoire de commande (2), avec un système de fixation selon l'une des revendications précédentes ainsi qu'avec une pièce de pied (20) qui présente un segment de fixation (8) pour le support de montage (1), le segment de fixation (8) présentant au moins un logement d'introduction (19) pour une deuxième extrémité profilée du support de montage (1), et la pièce de pied (20) présentant, sur un côté situé en face du segment de fixation (8), au moins un tourillon (7) par le biais duquel la pièce de pied (20) peut être introduite dans un creux ou un passage (21) d'une deuxième plaque d'adaptation (4), d'une contrefiche profilée (11) d'un châssis-cadre d'armoire de commande, ou d'un rail de montage (12).

7. Kit d'installation selon la revendication 6, qui présente également une deuxième plaque d'adaptation (4) qui présente un creux (9) destiné à recevoir le tourillon (7) de la pièce de pied (20) et des moyens (10) destinés à la fixation de la deuxième plaque d'adaptation (4) sur une contrefiche profilée (11) d'un châssis-cadre d'armoire de commande ou d'un rail de montage (12).

8. Kit d'installation ou système de fixation selon l'une des revendications précédentes, dans lequel la première et/ou la deuxième plaque d'adaptation (4) présente une rainure de guidage (22) s'étendant perpendiculairement à l'étendue longitudinale de son creux (9), à partir d'une bordure de la plaque d'adaptation (4), et débouchant dans le creux (9).

9. Kit d'installation ou système de fixation selon l'une des revendications précédentes, dans lequel la première et/ou la deuxième plaque d'adaptation (4), sur un côté tourné, dans la position de montage, vers une contrefiche profilée (11) d'un châssis-cadre d'armoire de commande ou d'un rail de montage (12), présente, pour le pré-positionnement de la plaque d'adaptation (4) par rapport à la contrefiche profilée (11), au moins un contour à complémentarité de forme (23) qui présente un contour extérieur qui est adapté à un contour intérieur d'une perforation (24) de la contrefiche profilée (11) ou du rail de montage (12).

10. Kit d'installation selon l'une des revendications 8 à 10, qui présente également un rail de montage (12) qui, pour le montage entre des contrefiches profilées (11) opposées d'un châssis-cadre d'armoire de commande, présente une première et une deuxième extrémité de fixation (25), le rail de montage (12) présentant un côté d'appui (26) pour la plaque d'adaptation (4), pour le segment d'encliquetage (6) ou pour la pièce de pied (20), et le côté d'appui (26) présentant au moins un creux, au moins un passage ou une perforation de système (27).
